# EUROPEAN PATENT SPECIFICATION

(11) **EP 1 732 405 B1**
(45) Date of publication and mention of the grant of the patent: **22.07.2015**
(21) Application number: 05715875.0
(22) Date of filing: 09.03.2005
(51) Int. Cl.: A23L 1/30, A23L 1/00, A23L 1/164

(54) **EXTRUSION-STABLE POLY-UNSATURATED FATTY-ACID COMPOSITIONS FOR FOOD PRODUCTS**
EXTRUSIONSTABILE ZUSAMMENSETZUNGEN VON MEHRFACH UNGESÄTTIGTEN FETTSÄUREN FÜR NAHRUNGSMITTELPRODUKTE
COMPOSITIONS D'ACIDES GRAS POLYINSATURES (PUFA) STABLES A L'EXTRUSION DESTINEES A DES PRODUITS ALIMENTAIRES

(30) Priority: 18.03.2004 EP 04006502
(43) Date of publication of application: 20.12.2006
(73) Proprietor: DSM IP Assets B.V., 6411 TE Heerlen (NL)
(72) Inventor: DIGUET, Sylvain, F-68220 Hagenthal-le-Haut (FR); FELTES, Karin, 79650 Schopfheim (DE); KLEEMANN, Nicolle, 79774 Albbruck (DE); LEUENBERGER, Bruno, CH-4123 Allschwil (CH); ULM, Johann, CH-4104 Oberwil (CH)
(74) Representative: Kurt, Manfred
(86) International application number: PCT/EP2005/002486
(87) International publication number: WO 2005/089569

(56) References cited:
- GB-A- 1 349 404
- US-A- 4 217 370
- US-A- 5 356 636
- US-A- 5 853 761
- US-A1- 2003 044 490
- US-A1- 2003 185 960
- US-A1- 2004 017 017
- US-B1- 6 444 227

## Description

The present invention relates to the use of compositions comprising PUFAs (long chain poly-unsaturated fatty acids) in the preparation of extruded ready-to-eat cereals. More precisely, the present invention relates to the use of encapsulated particles comprising PUFAs, especially from marine oils, maintaining good sensory properties in extruded ready-to-eat cereals, for the preparation of such food.

During the last years marine oils have attracted substantial interest as a source of long chain polyunsaturated fatty acids which have gained increased importance as dietary supplements. Today there is reasonable evidence that increasing dietary levels of PUFAs can reduce the incidence of death from coronary heart diseases via effects on blood pressure, atherosclerosis, and thrombogenesis.

PUFAs are classified according to the position of the double bonds in the carbon chain of the molecule as n-9, n-6 or n-3 PUFAs. Examples of n-6 PUFAs are linoleic acid (C18 : 2), arachidonic acid (C20 : 4), γ-linolenic acid (GLA, C18 : 13) and dihomo- γ - linolenic acid (DGLA, C20 : 3). Examples of n-3 PUFAs are α-Iinolenic acid (C18 : 13), eicosapentaenoic acid (EPA, C20 : 5), and docosahexaenoic acid (DHA, C22 : 6). Especially EPA and DHA have attracted interest of the food industry in recent years. The most available sources of these two fatty acids are fish and the marine oils extracted from them.

With increasing number of double bonds the PUFAs are subject to increasing oxidative degradation and development of undesirable "off-flavors", mainly fishy smell and taste. The increasing interest in the PUFAs, such as EPA and DHA, has prompted research in methods of refining and stabilization of fish oils and concentrates of PUFAs.

It has been known for a long time that freshly refined marine oils are initially free from off-flavours and a taste and smell of fish but that reversion through oxidation occurs rapidly. Many attempts have been made to stabilize the oils, e.g., by the addition of different anti-oxidants or mixtures thereof. However, most attempts have failed so far or at least left open the possibility of further improvements. Until today, there is a need to develop compositions on the basis of PUFAs or marine oils containing them which have good sensory properties over a long time and can therefore be used as dietary supplements, e.g., in the form of dry, free-flowing powders or beadlets. Several stabilized PUFA oils and microencapsulated powders are on the market and do indeed show sensory improvements over the non-stabilized oils. However, the sensory issues of PUFAs are still one of the most limiting factors in their application and use in food stuff. This is especially true for foods produced by aggressive processes with respect to heat, moisture, oxygen and pressure. An important example of such a process is the extrusion process, which is very widely used to prepare cereals, especially the so called breakfast cereals. The incorporation of PUFA's in the form of stabilized oils or microencapsulated powders results in unacceptable sensory properties of the final cereal.

According to US Patent 4,670,247 and EP 285 682 B2 fat soluble beadlets are prepared by emulsifying fat soluble substances such as polyunsaturated fatty acids with water, gelatin and a sugar and further converting said emulsion to droplets, collecting the droplets in a collecting powder to form particles, separating the particles, from the collecting powder and heat treating the resulting product to form a water insoluble beadlet. The sugar is a reducing sugar and can be selected from the group consisting of fructose, glucose, lactose, maltose, xylose and mixtures thereof. The collecting powder used according to US Patent 4670247 is a starchy powder. The heat treatment results in crosslinking of the gelatin matrix. According to conventional heating methods the crosslinking step is performed by heating on pre-heated stainless steel trays in an electric oven at a temperature of from about 90°C for 2 hours to about 180°C for less than a minute.

According to USP 6,444,227 beadlets containing fat soluble substances, e.g., PUFAs, are obtained by (a) forming an aqueous emulsion of the substance, a gelatine, a reducing sugar and, optionally an antioxydant and/or a humectant, (b) optionally adding a crosslinking enzyme, (c) converting the emulsion into a dry powder and (d) crosslinking the gelatine matrix in the coated particles by radiation or by incubating (in case of an enzyme being present).

According to EP 494 417 B1 stable, hot water-insoluble powders comprising water-emulsifiable active ingredients in a cross-linked gelatine matrix are obtained by (a) making an emulsion of the ingredient in an aqueous solution of gelatine, glucose and/or fructose, and an alkaline or alkaline earth salt of an organic or inorganic acid, (b) reducing the water content of the emulsion to 15 - 4% (w/w) and heating the composition to a temperature of 55 - 180°C while maintaining the moisture content of the composition at a level of at least 3% (w/w).

According to EP 547 422 B1 stable, hot water-insoluble powders comprising fat-soluble vitamins or carotenoids embedded in a gelatine-based matrix are obtainable by (a) preparing an aqueous dispersion containing essentially these fat-soluble active substances, reducing sugars and, as film-forming colloid, gelatine in combination with physiologically tolerated organic amino compounds which contain a basic primary amino group and, in addition, either another amino group, a hydroxyl group, an alkoxy group or a carboxyl group, in free form or in a form bonded in the manner of a salt and/or in combination with an amount of a basic alkali metal or alkaline earth metal compound such that the dispersion has a pH of from 7.5 to 10, (b) converting this dispersion into dry vitamin and/or carotenoid products in powder form and (c) thermally curing the powder at from 60 to 180°C.

It has now been found that beadlets or powders containing PUFAs, the gelatine matrix of which has been crosslinked as described, e.g., in USP 4,670,247 and USP 6,444,227 or EP 494 417 B1 and EP 547 422 B1, respectively, can be incorporated into food, preferably cereals, to be extruded with excellent sensory properties of the final product. It has also been found that also other proteins than gelatine, capable of being cross-linked, of plant and animal origin, can be used as matrix. Sources of plant proteins may be, e.g., soy, peas, lupines, beans, broad beans, chickpeas and other leguminosae, gluten, wheat, oat, barley, rice, corn, maize and other cereals, or canola, rapeseed, sunflowers, etc. The term "protein" also comprises protein hydrolysates, obtained by chemical, enzymatical or thermal degradation.

The term "beadlet" comprises any encapsulated, especially microencapsulated particles and powders containing an active oil soluble substance like, e.g., vitamins, carotinoids, PUFAs, etc. The particles can be obtained by a powder catch process (beadlets with a layer of a water insoluble substance, e.g., starch, Ca-silicate, silica acid, etc.), by spray drying or spray agglomeration. The particle size can be in the range of about 10 - 10000 microns, preferably of about 10 - 1000 microns: for spray dried products about 10 - 200 microns, for powder catch products about 125 - 850 microns and for agglomerated products about 10 - 300 microns.

According to the independent claims 1 and 2, the present invention, therefore, relates to the use of compositions in beadlet form comprising PUFAs embedded in a crosslinked protein matrix, preferably a gelatine or gelatine sugar matrix, for the preparation of extruded ready-to-eat cereals, and to according to independent claims 6 and 7 to a process for the preparation thereof.

Compositions in beadlet form comprising a crosslinked gelatine sugar matrix and their preparation are described, e.g., in U.S. patent specifications Nos. 4,670.247; 5,126,328; 5,153,177; 5,356,636; and 6,444,227. Compositions and their preparation which are not specifically mentioned in the above references but which are equivalent to them, especially in terms of their stability, are also an embodiment of the present invention.

The compositions of the present invention may additionally contain proteins or protein hydrolysates that act as protective colloids, e.g., from soy or lupines. The term "PUFAs" relates to polyunsaturated fatty acids valuable as dietary supplements individually or as mixtures, prepared synthetically or purified, concentrated or isolated from natural sources, in the form of the free acids, their salts, mono-, di-or triglycerides or other esters, e.g., ethyl esters, obtainable, e.g., from glycerides by transesterification.

PUFAs of preferred interest are n-3 and n-6 PUFAs, espec. EPA, DPA and DHA of food-grade quality, preferably in the form of their triglycerides, especially as components of concentrates obtained from marine oils, preferably from fish. They can be stabilized and/or deodorized by methods known in the art, e.g., by addition of antioxidants, emulsifiers, spice or herbs, such as rosemary or sage extracts.

The terms "extruded food" and "extruded cereals" are used in the meaning with which the person skilled in the art is familiar and comprise all food or cereals which are obtained by compression as part of their preparation and relate to extrusion products based on corn, wheat, rye, barley, oats, rice, millet, etc., comprising, optionally, additives such as flavourings, vitamins and minerals. Extruded cereals and the technology for their preparation is described in detail in, e.g., "Extrusion Cooking", R. Guy, editor, Woodhead Publ. Ltd., Cambridge, GB, 2001. The term extrusion, therefore, comprises extrusion cooking as well as extrusion at relatively low temperatures. Low temperature extrusion is used in the preparation of pasta and noodles while extrusion at relatively high temperatures is used for ready-to-eat cereals, such as breakfast cereals and snacks. Typical, extruded cereals are represented by corn-flakes, wheat flakes, bran flakes, rice crispies, rice flakes, oat hoops, puffed corn, puffed wheat, corn balls and wheat balls, many of them on the market under well-known brand names.

The extruded ready-to-eat cereal products of the present invention can be prepared from a wide variety of bulk cereal ingredients which include: whole grains such as whole wheat, rice, corn, oat, barley, millet and rye; grain components such as wheat germ and brans including oat bran, wheat bran, etc.; flour such as wheat flour, corn flour, etc.; legumes such as soybeans, peas, beans and the like; and non-bran fiber sources such as prune fiber, beet fiber and citrus pulp and other raw material ingredients which are conventionally included in ready-to-eat cereals.

The preparation of the extruded ready-to-eat cereals in accordance with the present invention is achieved according to methods well-known in the art. The method can be generally summarized to comprise
(a) adding to an extruder cereal material, PUFA-containing encapsulated particles wherein the compositions are in the form of beadlets and wherein the PUFA content is from 10 - 60% (w/w) of the crosslinked beadlet and, optionally, an internal lubricant and/or further ingredients,
(b) mixing these components in the extruder to obtain a homogeneous mixture.
(c) extruding and cutting said mixture into pieces and optionally
(d) coating and/or drying said pieces;
or
(a)adding to an extruder cereal material, PUFA-containing encapsulated particles, wherein the compositions are in the form of beadlets and wherein the compositions are in the form of beadlets and wherein the PUFA content is from 1 - 80% (w/w) of the crosslinked beadlet, and wherein the main PUFA content is represented by EPA and DHA.
   and, optionally, an internal lubricant and/or further ingredients,
(b) mixing these components in the extruder to obtain a homogeneous mixture.
(c) extruding and cutting said mixture into pieces and optionally
(d)coating and/or drying said pieces.

In a specific embodiment of the present invention, viz. the preparation of extruded cereals, the method comprises the following steps
(a) adding to a screw extruder cereals, PUFA-containing beadlets and, optionally, an internal lubricant and/or further ingredients,
(b) mixing these components in the extruder to obtain a homogeneous mixture,
(c) extruding and cutting said mixture into pieces and optionally
(d) coating and/or drying said pieces.

Any extruder using an appropriate extrusion screw configuration can be used, conveniently horizontal screw extruders and preferably extruders with a configuration for achieving low shear mixing. For example, a combination of alternative small pitch conveying elements with distributive mixing elements that are staggered at an angle to each other for providing axially oriented leakage flow inside the extruder barrel may be employed. The combination of alternating conveying elements with distributive mixing and kneading elements cause the material flow to be continuously interrupted without shearing of the mass thus resulting in mixing of the material at low mechanical energy input. Co-rotating intermeshing twin screw extruders, such as those available from Bühler, Switzerland; Clextral, France; Werner and Pfleiderer, Germany; APV, England or Wenger, USA; or a Co-Kneader, available from Buss, Switzerland, are preferred, since they provide superior mixing action compared to other single screw extruders.

The components can be added to the extruder as a premix or separately at different sites of it. Further ingredients comprise additives normally used in the preparation of extruded cereals, e.g., flavorings, antioxidants, vitamins, minerals, protective colloids and further components increasing the nutritive or dietetic value of the food product.

In order to be successfully incorporated into the ready-to-eat cereals and to be stable under normal storage conditions the PUFA beadlets should be of a particle size ranging from 50µm (microns) to 1600µm. A preferred particle size range is from about 160µm to 840µm and a more preferred range from 180 - 450µm. Especially preferred is a particle size range of 200 - 300µm.

According to published values the PUFA content of the crosslinked beadlets varies from 1 - 80% or 20 - 40% with preferred ranges of 10 - 60% or 25 - 35%, respectively, but the content can always be adapted to specific trends and needs of the consumer and to specific final products.

The content of PUFAs in the extruded ready-to-eat cereals can also vary within broad limits and a dosage depending upon the needs can be choosen. Thus, the fortification can be in a range of from 0.1% to 10% and is preferably 1- 3%.

The stability of the PUFA-fortified extruded cereals in terms of good sensory quality is expected to last for several weeks until several months under normal storage conditions.

The following Example illustrates the invention in detail.

### Example

118.5 g of dried fish gelatin, 23.4 g fructose, 20.9 g glycerol and 17.2 g sodium ascorbate were placed in a 1000 ml double wall vessel, 140 ml of de-ionized water were added and the mixture was brought into solution while stirring with a micer disc at 500 revolutions/minute (rpm) and approx. 40°C. This solution is called matrix solution. Thereupon, 132.2 g of ROPUFA® '30' n-3 Food Oil (a refined fish oil blend with minimum 30% n-3 PUFAs [at least 25% DHA, EPA and DPA] in form of triglycerides stabilized with mixed tocopherols, ascorbyl palmitate and containing rosemary extract) were emulsified in this matrix and stirred for 10 minutes. During the emulsification and stirring the micer disc was operated at 4800 rpm. After this emulsification the internal phase of the emulsion had an average particle size of about 254 nm (measured by laser diffraction). The emulsion was diluted with 310 ml of de-ionized water and the temperature was held at 70°C.

Subsequently 1300 g of corn starch (fluidized with silicic acid) were placed in a laboratory spray pan and cooled to at least 0°C. The emulsion was sprayed into the spray pan using a rotating spray nozzle in two parts. The thus-obtained particles coated with corn starch were sieved off (sieve fraction 0.125 to 0.63 mm) from the excess corn starch and dried at room temperature using a stream of air. There were obtained 389 g of particles coated with corn starch which had outstanding flow properties, were completely dry and could be handled very well.

For heat treatment portions of 100 g of the above particles were placed in a fluid bed dryer (Retsch) and heated to 135°C for 20 minutes. This heat treatment results in a cross-linking of the gelatin matrix (Maillard reaction). The DHA/EPA content of the final product was 9.0% (DHA: 5.3%; EPA: 3.7%), the degree of cross-linking 94% and loss on drying 1.2%. The cross-linking degree is determined by dispersing the product in water at 55°C during 15 minutes at a concentration of 20% and determination of the released PUFA oil.

Breakfast cereals with this extrusion stable form were produced on a horizontal twin screw extruder (Bühler, Switzerland) in accordance with methods well-known in the art.

The following composition was used to prepare an extruded cereal product:

| | %(w/w) |
|---|---|
| Rice flour | 65 |
| Corn flour | 20 |
| Sugar | 10 |
| NaCl | 1 |
| PUFA beadlets | 1 |
| Water | q.s. ad 100 |

Process parameters:
I/d = 16; screw speed 380 rpm; drepressure 67 bar; die temperature 156°C.

The cereals after extrusion were coated with a sugar syrup (75% sucrose in water) in a coating pan and subsequently dried in a fluid bed dryer.

The uncoated breakfast cereals thus obtained were subjected to an assessment by a trained taste panel. The sensory analysis was performed by means of descriptive analysis by using interval scales in terms of fishiness.

The organoleptic properties of these cereals were found clearly superior when compared with cereals supplemented with not-crosslinked matrix PUFA containing beadlets.

## Claims

1. Use of compositions in the form of encapsulated particles comprising PUFAs embedded in a cross-linked protein matrix for the preparation of extruded ready-to-eat cereals, wherein the compositions are in the form of beadlets, and wherein the PUFA content is from 10 - 60% (w/w) of the crosslinked beadlet.

2. Use of compositions in the form of encapsulated particles comprising PUFAs embedded in a cross-linked protein matrix for the preparation of extruded ready-to-eat cereals, wherein the compositions are in the form of beadlets and wherein the PUFA content is from 1 - 80% (w/w) of the crosslinked beadlet and wherein the main PUFA content is represented by EPA and DHA.

3. Use according to claim 1 or claim 2 wherein the protein matrix is a gelatine matrix.

4. Use according to any one of claims 1 - 3 wherein the PUFAs are part of a purified and stabilized marine oil.

5. Use according to any one of claims 1, 3, or 4, wherein the main PUFA content is represented by EPA and DHA.

6. A process for preparing extruded ready-to-eat cereals comprising the steps of
(a) adding to an extruder cereal material, PUFA-containing encapsulated particles wherein the compositions are in the form of beadlets and wherein the PUFA content is from 10 - 60% (w/w) of the crosslinked beadlet and, optionally, an internal lubricant and/or further ingredients,
(b) mixing these components in the extruder to obtain a homogeneous mixture.
(c) extruding and cutting said mixture into pieces and optionally
(d) coating and/or drying said pieces.

7. A process for preparing extruded ready-to-eat cereals comprising the steps of
(a)adding to an extruder cereal material, PUFA-containing encapsulated particles, wherein the compositions are in the form of beadlets and wherein the compositions are in the form of beadlets and wherein the PUFA content is from 1 - 80% (w/w) of the crosslinked beadlet, and wherein the main PUFA content is represented by EPA and DHA.
and, optionally, an internal lubricant and/or further ingredients,
(b)mixing these components in the extruder to obtain a homogeneous mixture.
(c)extruding and cutting said mixture into pieces and optionally (d)coating and/or drying said pieces.

8. A process according to claim 6 or claim 7, wherein the protein matrix is a gelatine matrix.

9. A process according to any one of claims 6 - 8, wherein PUFAs are part of a purified and stabilized marine oil.

10. A process according to any one of claims 6, 8 or 9, wherein main PUFA content is represented by EPA and DHA.

11. A process according to any one of claims 6 - 10 for the preparation of extruded ready-to-eat cereals comprising the steps of
(a) adding to a screw extruder cereals, PUFA-containing beadlets and, optionally, an internal lubricant and/or further ingredients,
(b) mixing these components in the extruder to obtain a homogeneous mixture,
(c) extruding and cutting said mixture into pieces and optionally
(d) coating and/or drying said pieces.

## Patentansprüche

1. Verwendung von Zusammensetzungen in der Form von verkapselten Partikeln, die PUFAs umfassen, in eine vernetzte Proteinmatrix eingebettet für die Herstellung von extrudierten verzehrfertigen Zerealien, wobei die Zusammensetzungen in der Form von Kügelchen vorliegen und wobei der PUFA-Gehalt von 10-60 % (w/w) der vernetzten Kügelchen beträgt.

2. Verwendung von Zusammensetzungen in der Form von verkapselten Partikeln, die PUFAs umfassen, in eine vernetzte Proteinmatrix eingebettet für die Herstellung von extrudierten verzehrfertigen Zerealien, wobei die Zusammensetzungen in der Form von Kügelchen vorliegen und wobei der PUFA-Gehalt von 1-80 % (w/w) der vernetzten Kügelchen beträgt und wobei der Haupt-PUFA-Gehalt von EPA und DHA dargestellt wird.

3. Verwendung gemäß Anspruch 1 oder Anspruch 2, wobei die Proteinmatrix eine Gelatinematrix ist.

4. Verwendung gemäß einem der Ansprüche 1-3, wobei die PUFAs Teil eines gereinigten und stabilisierten Seetieröls sind.

5. Verwendung gemäß einem der Ansprüche 1, 3 oder 4, wobei der Haupt-PUFA-Gehalt von EPA und DHA dargestellt wird.

6. Verfahren zum Herstellen von extrudierten verzehrfertigen Zerealien, umfassend die Schritte
(a) Zugeben von Zerealienmaterial, PUFA-enthaltenden verkapselten Partikeln, wobei die Zusammensetzungen in der Form von Kügelchen vorliegen und wobei der PUFA-Gehalt 10-60 % (w/w) der vernetzten Kügelchen beträgt, und gegebenenfalls einem internen Gleitmittel und/oder weiteren Inhaltsstoffen in einen Extruder,
(b) Mischen dieser Komponenten in dem Extruder, um ein homogenes Gemisch zu erhalten,
(c) Extrudieren und Schneiden des Gemischs zu Stücken und gegebenenfalls
(d) Überziehen und/oder Trocknen der Stücke.

7. Verfahren zum Herstellen von extrudierten verzehrfertigen Zerealien, umfassend die Schritte
(a) Zugeben von Zerealienmaterial, PUFA-enthaltenden verkapselten Partikeln, wobei die Zusammensetzungen in der Form von Kügelchen vorliegen und wobei die Zusammensetzungen in der Form von Kügelchen vorliegen und wobei der PUFA-Gehalt 1-80 % (w/w) der vernetzten Kügelchen beträgt und wobei der Haupt-PUFA-Gehalt von EPA und DHA dargestellt wird,
und gegebenenfalls einem internen Gleitmittel und/oder weiteren Inhaltsstoffen in einen Extruder,
(b) Mischen dieser Komponenten in dem Extruder, um ein homogenes Gemisch zu erhalten,
(c) Extrudieren und Schneiden des Gemischs zu Stücken und gegebenenfalls
(d) Überziehen und/oder Trocknen der Stücke.

8. Verfahren gemäß Anspruch 6 oder Anspruch 7, wobei die Proteinmatrix eine Gelatinematrix ist.

9. Verfahren gemäß einem der Ansprüche 6-8, wobei die PUFAs Teil eines gereinigten und stabilisierten Seetieröls sind.

10. Verfahren gemäß einem der Ansprüche 6, 8 oder 9, wobei der Haupt-PUFA-Gehalt von EPA und DHA dargestellt wird.

11. Verfahren gemäß einem der Ansprüche 6-10 für die Herstellung von extrudierten verzehrfertigen Zerealien, umfassend die Schritte
(a) Zugeben von Zerealien, PUFA-enthaltenden Kügelchen und gegebenenfalls einem internen Gleitmittel und/oder weiteren Inhaltsstoffen in einen Schneckenextruder,
(b) Mischen dieser Komponenten in dem Extruder, um ein homogenes Gemisch zu erhalten,
(c) Extrudieren und Schneiden des Gemischs zu Stücken und gegebenenfalls
(d) Überziehen und/oder Trocknen der Stücke.

## Revendications

1. Utilisation de compositions sous la forme de particules encapsulées comprenant des PUFA incorporés dans une matrice de protéine réticulée pour la préparation de céréales prêtes à consommer extrudées, dans laquelle les compositions sont sous la forme de granules, et dans laquelle la teneur en PUFA est de 10 à 60 % (m/m) du granule réticulé.

2. Utilisation de compositions sous la forme de particules encapsulées comprenant des PUFA incorporés dans une matrice de protéine réticulée pour la préparation de céréales prêtes à consommer extrudées, dans laquelle les compositions sont sous la forme de granules et la teneur en PUFA est de 1 à 80 % (m/m) du granule réticulé et dans laquelle la teneur principale en PUFA est représentée par EPA et DHA.

3. Utilisation selon la revendication 1 ou la revendication 2 dans laquelle la matrice de protéine est une matrice de gélatine.

4. Utilisation selon l'une quelconque des revendications 1 à 3 dans laquelle les PUFA font partie d'une l'huile marine purifiée et stabilisée.

5. Utilisation selon l'une quelconque des revendications 1, 3 ou 4, dans laquelle la teneur principale en PUFA est représentée par EPA et DHA.

6. Procédé de préparation de céréales prêtes à consommer extrudées comprenant les étapes de
(a) ajout à une extrudeuse de matériau de céréales, de particules encapsulées contenant des PUFA, dans lequel les compositions sont sous la forme de granules et dans lequel la teneur en PUFA est de 10 à 60 % (m/m) du granule réticulé et, facultativement, un lubrifiant interne et/ou des ingrédients supplémentaires,
(b) mélange de ces composants dans l'extrudeuse pour obtenir un mélange homogène,
(c) extrusion et découpe dudit mélange en morceaux et facultativement
(d) enrobage et/ou séchages desdits morceaux.

7. Procédé de préparation de céréales prêtes à consommer extrudées comprenant les étapes de
(a) ajout à une extrudeuse de matériau de céréales, de particules encapsulées contenant des PUFA dans lequel les compositions sont sous la forme de granules et dans lequel la teneur en PUFA est de 1 à 80 % (m/m) du granule réticulé, et dans lequel la teneur principale en PUFA est représentée par EPA et DHA,
et, facultativement, un lubrifiant interne et/ou des ingrédients supplémentaires,
(b) mélange de ces composants dans l'extrudeuse pour obtenir un mélange homogène,
(c) extrusion et découpe dudit mélange en morceaux et facultativement
(d) enrobage et/ou séchages desdits morceaux.

8. Procédé selon la revendication 6 ou la revendication 7, dans lequel la matrice de protéine est une matrice de gélatine.

9. Procédé selon l'une quelconque des revendications 6 à 8, dans lequel les PUFA font partie d'une l'huile marine purifiée et stabilisée.

10. Procédé selon l'une quelconque des revendications 6, 8 ou 9, dans lequel la teneur principale en PUFA est représentée par EPA et DHA.

11. Procédé selon l'une quelconque des revendications 6 à 10 pour la préparation de céréales prêtes à consommer extrudées comprenant les étapes de
(a) ajout à une extrudeuse à vis de céréales, de granules contenant des PUFA et, facultativement, d'un lubrifiant interne et/ou d'ingrédients supplémentaires.
(b) mélange de ces composants dans l'extrudeuse pour obtenir un mélange homogène,
(c) extrusion et découpe dudit mélange en morceaux et facultativement
(d) enrobage et/ou séchages desdits morceaux.
